# EUROPÄISCHE PATENTSCHRIFT

(11) **EP 3 673 168 B1**
(45) Veröffentlichungstag und Bekanntmachung des Hinweises auf die Patenterteilung: **04.01.2023**
(21) Anmeldenummer: 18765547.7
(22) Anmeldetag: 10.08.2018
(51) Int. Cl.: F02K 3/068, F02C 3/09, F02C 3/14, F02C 3/16

(54) **STRAHLTRIEBWERK**
TURBOFAN ENGINE
MOTEUR AÉRONEF À DOUBLE FLUX

(30) Priorität: 21.08.2017 DE 102017119070
(43) Veröffentlichungstag der Anmeldung: 01.07.2020
(73) Patentinhaber: von Westernhagen, Finn, 20535 Hamburg (DE)
(72) Erfinder: von Westernhagen, Finn, 20535 Hamburg (DE); Kozulovic, Dragan, 22143 Hamburg (DE)
(74) Vertreter: Jaeschke, Rainer
(86) Internationale Anmeldenummer: PCT/DE2018/100705
(87) Internationale Veröffentlichungsnummer: WO 2019/037816

(56) Entgegenhaltungen:
- WO-A1-2008/113088
- US-A- 3 269 120
- US-A- 3 283 509
- US-A- 3 892 069
- US-B2- 8 033 092

## Beschreibung

Die Erfindung betrifft ein Strahltriebwerk mit einem feststehenden Gehäuse, in dem eine Primärströmung ausgebildet ist, in der einströmende Luft in wenigstens einer Brennkammer verbrannt wird, und in welchem Gehäuse eine Sekundärströmung ausgebildet ist, in dem einströmende Luft durch einen Fan beschleunigt und am Auslasskonus des Gehäuses zusammen mit dem Abgas der Brennkammer ausgestoßen wird, welcher Fan auf einer Hauptwelle um eine Achse drehbar gelagert ist und eine Vielzahl von im wesentlichen radial verlaufenden Fanschaufeln aufweist.

Solche Strahltriebwerke sind allgemein und in unterschiedlichen Ausführungsformen bekannt. Eine mögliche Ausführungsform ist ein Mantelstromtriebwerk, bei dem die Sekundärströmung die Primärströmung außen umgibt. Häufig ist die Anordnung so getroffen, dass in axialer Richtung von vorne nach hinten zunächst der Fan auf der Hauptwelle angeordnet ist. Hinter dem Fan wird die einströmende und durch den Fan beschleunigte Luft aufgeteilt in die innere Primärströmung und die äußere Sekundärströmung. Es folgt in der Primärströmung der Verdichter, der als Axialverdichter ausgebildet ist. Die so verdichtete Luft gelangt in die Brennkammer(n), die axial hinter dem Verdichter angeordnet ist (sind). In der Brennkammer wird der zugeführte Treibstoff, in der Regel Kerosin, mit der verdichteten Luft verbrannt. Dieses Luft-Abgasgemisch wird am Austrittskonus des Gehäuses unter Bildung des Schubs ausgestoßen.

Um den Fan und den Verdichter anzutreiben, ist hinter den Brennkammern eine Turbine auf der Hauptwelle angeordnet, die die erforderliche Drehbewegung des Fans und des Verdichters auf der Hauptwelle bewirkt. Durch die axial aufeinanderfolgende Anordnung des Fans, des Verdichters, der Brennkammern, der Turbine und des Austrittskonus baut ein solches Strahltriebwerk relativ lang. Auch ist ein solches Strahltriebwerk aufgrund der Vielzahl der Baugruppen relativ schwer.

Aus der US 8,033,092 B2 ist ein Strahltriebwerk bekannt, bei welchem die Turbine zum Antreiben des Fans und des Verdichters ringförmig den Fan umgibt. Der Fan weist hohle Schaufeln auf, durch die die Verbrennungsluft zu der ringförmigen Brennkammer geleitet wird. Die Abgase der Brennkammer treiben die Turbine an und vermischen sich hinter der Turbine mit der Sekundärströmung. Dabei werden die Abgase über eine ringförmige Abgasdüse von außen der Sekundärströmung zugeführt.

Der Erfindung liegt die Aufgabe zugrunde, ein Strahltriebwerk anders aufzubauen, so dass es kürzer und auch leichter baut.

Die Aufgabe wird durch die Erfindung gemäß Anspruch 1 gelöst, wobei wenigstens eine Fanschaufel oder eine Mehrzahl der Fanschaufeln oder alle Fanschaufeln wenigstens einen Lufteinlasskanal für die Primärströmung aufweisen, der die Luft der Primärströmung durch die Fanschaufel zu der Brennkammer leitet, und wenigstens eine Fanschaufel oder eine Mehrzahl der Fanschaufeln oder alle Fanschaufeln jeweils einen Auslasskanal mit einer zumindest teilweise axial und zumindest teilweise tangential ausgerichteten Auslassöffnung aufweisen, um das Abgas der Brennkammern der beschleunigten Luft der Sekundärströmung zuzuführen, welches Luft-Abgasgemisch unter Erzeugung des Schubs am Austrittskonus des Gehäuses des Strahltriebwerks austritt. Durch die Anordnung der Lufteinlasskanals der Primärströmung in der Fanschaufel wird die einströmende Luft aufgrund der Drehbewegung weiter verdichtet.

Weiterhin ist der Abgasstrom zum einen axial nach hinten ausgerichtet. Zum anderen ist der Abgasstrom aber auch tangential ausgerichtet, so dass durch den Rückstoß beim Austritt aus dem Auslasskanal der Fan in seiner Drehrichtung angetrieben wird. Dadurch wird die Hauptwelle angetrieben, auf der auch ein Verdichter für die Primärströmung angeordnet sein kann. Auf eine Turbine hinter den Brennkammern zum Antreiben des Verdichters kann verzichtet werden, so dass sich der Bauraum weiter verkürzt. Es wird zudem die vollständige Baugruppe der Turbine eingespart, so dass das Strahltriebwerk insgesamt leichter ist. Weiterhin kann sich die Auslassöffnung über die gesamte freie Höhe der Fanschaufel im ringförmigen Strömungskanal erstrecken, so dass eine gute Vermischung der Primärströmung und der Sekundärströmung erreicht wird. Insbesondere erfolgt eine Vermischung über den gesamten ringförmigen Querschnitt des Strömungskanals der Sekundärströmung.

Aufgrund der erfindungsgemäßen Anordnung der Lufteinlasskanäle und der Auslasskanäle ist das Strahltriebwerk so ausgebildet, dass die Brennkammer in einem den Fan umgebenden Teil des Gehäuses angeordnet ist. Die freien Enden der Fanschaufeln münden in einem Ring, der zwei umlaufende Öffnungen aufweist, wobei eine Öffnung mit dem Lufteinlasskanal in der Fanschaufel und mit der Lufteinlassöffnung der Brennkammer in Strömungsverbindung steht und die andere mit dem Auslasskanal in der Fanschaufel und dem Abgasausgang der Brennkammer in Strömungsverbindung steht. Dadurch wird die Primärströmung stets über geschlossene Kanäle geführt.

Es ist dabei vorgesehen, dass die freien Enden der Fanschaufeln jeweils einen in Umfangsrichtung erweiterten ersten Bereich mit der Öffnung für den Lufteinlassstrom und jeweils einen in Umfangsrichtung erweiterten zweiten Bereich mit der Öffnung für den Abgasstrom aufweisen, welche ersten und zweiten Bereiche in der Frontansicht eine kreisbogenabschnittförmige Kontur haben derart, dass die jeweiligen Öffnungen der ersten und zweiten Öffnungen in der montierten Lage jeweils die umlaufenden Öffnungen bilden. Dadurch wird die Herstellung des Fans erleichtert, der demnach eine Vielzahl von gleichartig ausgebildeten Fanschaufeln aufweist, die entlang dem Umfang auf der Hauptwelle angeordnet sind. Die umlaufenden Öffnungen für den Lufteinlass und den Abgasstrom werden dann durch die benachbarten und aneinander anliegenden Endbereiche bei der Montage gebildet.

Es ist weiterhin günstig, wenn der Übergang des Lufteinlasskanals von der Fanschaufel zu der feststehenden Brennkammer und/oder der Übergang von der feststehenden Brennkammer zum Auslasskanal in der Fanschaufel über Labyrinthdichtungen erfolgen. Solche Dichtungen sind robust und wartungsfrei und bilden einen ausreichend dichten Übergang für die Lufteinlassströmung einerseits und Abgasströmung andererseits.

In einem Beispiel, welches nicht Teil der beanspruchten Erfindung ist, kann das Strahltriebwerk aber auch so ausgebildet sein, dass die Brennkammern in den Fanschaufeln angeordnet sind. Durch die Anordnung der Brennkammern in den Fanschaufeln brauchen die Brennkammern keinen zusätzlichen axialen Bauraum, so dass das Strahltriebwerk kürzer baut. Vorteilhaft ist es dabei, wenn die Brennkammern in den äußeren Endbereichen der Fanschaufeln angeordnet sind. Dann wird die Luft vor dem Eintritt in die Brennkammern aufgrund der radialen Strömungsrichtung und der Drehbewegung weiter verdichtet, so dass ein besserer Wirkungsgrad erreicht werden kann.

Bevorzugt ist dabei vorgesehen, dass die äußeren Endbereiche der Fanschaufeln in einem umlaufenden Fanring enden, in dem die Brennkammern angeordnet sind. Durch den Ring werden die Fanschaufeln stabilisiert, so dass die durch die Rotation entstehenden Fliehkräfte gut aufgenommen werden können. Der Fan bleibt somit trotz des durch die Brennkammern erzeugten Gewichts an den Enden der Fanschaufeln stabil.

Weiterhin kann vorgesehen werden, dass die äußeren Endbereiche des Fans und/oder der umlaufende Fanring in einer umlaufenden Ringnut in der Innenseite des Gehäuses verlaufen derart, dass nur die mittleren Abschnitte der Schaufelblätter der Fanschaufeln im Strömungskanal der Sekundärströmung liegen. Hierdurch kann eine günstigere Strömung in dem Kanal für die Sekundärströmung erreicht werden.

Es ist zweckmäßig, wenn die Brennkammer in dem äußeren Endbereich einer Fanschaufel oder in dem den Fan umgebende Teil des feststehenden Gehäuses axial ausgerichtet ist. Die Brennkammer kann dabei entgegen der Schubrichtung ausgerichtet sein. Durch diese Ausrichtung der Brennkammern in der Fanschaufel oder dem äußeren Ring oder dem umgebenden Gehäuseabschnitt wird nur ein geringer radialer Einbauraum benötigt, so dass der äußere Durchmesser des Strahltriebwerks klein bleiben kann. Auch braucht nur eine relativ flache Ringnut auf der Innenseite des Gehäusemantels vorhanden zu sein, um die Brennkammern oder den Fanring aufzunehmen. Der Auslasskanal mündet in der Rückseite einer Fanschaufel in deren mittleren Abschnitt, der sich in dem Ringkanal der Sekundärströmung befindet.

Es kann aber auch vorgesehen werden, dass die Brennkammer radial entlang einer Fanschaufel in deren Schaufelblatt angeordnet ist. Dann können die Fanschaufeln spitz auslaufend enden, und es ist kein äußerer Fanring zur Stabilisierung erforderlich. Allerdings befindet sich dann die Brennkammer näher an der Drehachse, so dass die zusätzliche Verdichtung der Luft vor den Brennkammern verringert wird.

Es kann vorgesehen werden, dass jede Fanschaufel eine Brennkammer aufweist. Es ist aber auch möglich, dass nur jede zweite oder dritte Fanschaufel eine Brennkammer aufweist. Dies hängt unter anderem von dem gewünschten Schub ab. Auch kann sich eine Brennkammer in den Fanring über mehrere Fanschaufeln erstrecken. Der Auslasskanal kann dann auf mehrere Fanschaufeln verteilt werden.

Bei dem Beispiel, welches nicht Teil der beanspruchten Erfindung ist, erfolgt die Treibstoffzuführung über die Hauptwelle, an der auch die Fanschaufeln angebracht sind. Es ist vorgesehen, dass Treibstoffzuführung für die Brennkammern durch die Hauptwelle erfolgt, welche Treibstoffzuführung über eine Dichtung mit der Treibstoffversorgung verbunden ist. Die Dichtung kann als Labyrinthdichtung ausgebildet sein. Solche Dichtungen sind robust und wartungsfrei. Die Treibstoffleitungen können über Stützen zwischen dem inneren Gehäuseabschnitt und der äußeren Gehäusewandungen aus dem Strahltriebwerk herausgeführt werden.

Es kann vorgesehen werden, dass die einströmende Luft im Primärkreis durch einen Verdichter vor der Brennkammer verdichtet wird. Dabei ist es zweckmäßig, wenn die Hauptwelle den Verdichter in der Primärströmung antreibt. Damit kann der Wirkungsgrad erhöht werden.

Im Einzelnen kann die Anordnung so getroffen sein, dass in axialer Richtung der Verdichter vor dem Fan angeordnet ist, so dass die verdichtete Luft ohne Umkehr in die Fanschaufeln geleitet werden kann. Der Fan und somit seine Fanschaufeln liegen dann hinter dem Verdichter. Der Verdichter ist koaxial zum Fan angeordnet und befindet sich innen im Strahltriebwerksgehäuse. Die einströmende Luft gelangt somit unmittelbar zum Verdichter. Der Verdichter wird von einem inneren Gehäuseabschnitt umgeben, der unter Bildung eines Ringkanals vom äußeren Gehäuse umgeben ist. In dem Ringkanal wird die Sekundärströmung ausgebildet, in der sich der Fan mit den Brennkammern befindet. Hinter dessen Fanschaufeln ist in axialer Richtung der Austrittskonus angeordnet. Die verdichtete Luft wird hinter dem Verdichter radial in die Fanschaufeln geleitet. Insgesamt ergibt sich dadurch eine verkürzte Baulänge des Strahltriebwerks.

Die Erfindung wird im Folgenden anhand der schematischen Zeichnung näher erläutert. Es zeigen:
- Fig. 1: einen Längsschnitt durch das Strahltriebwerk gemäß eines Beispiels, welches nicht Teil der beanspruchten Erfindung ist,
- Fig. 2: einen Schnitt entlang der Linie II-II in Figur 1 durch eine Fanschaufel,
- Fig. 3: die Vorderansicht auf das Strahltriebwerk in Figur 1 ohne das äußere Gehäuse,
- Fig. 4: einen Längsschnitt durch das Strahltriebwerk gemäß der Erfindung,
- Fig. 5: eine Fanschaufel in vergrößerter perspektivischer Ansicht des Strahltriebwerks in Figur 4,
- Fig. 6: mehrere Fanschaufeln gemäß Figur 5 nebeneinander in der montierten Lage und
- Fig. 7: die Einzelheit VII in Figur 4.

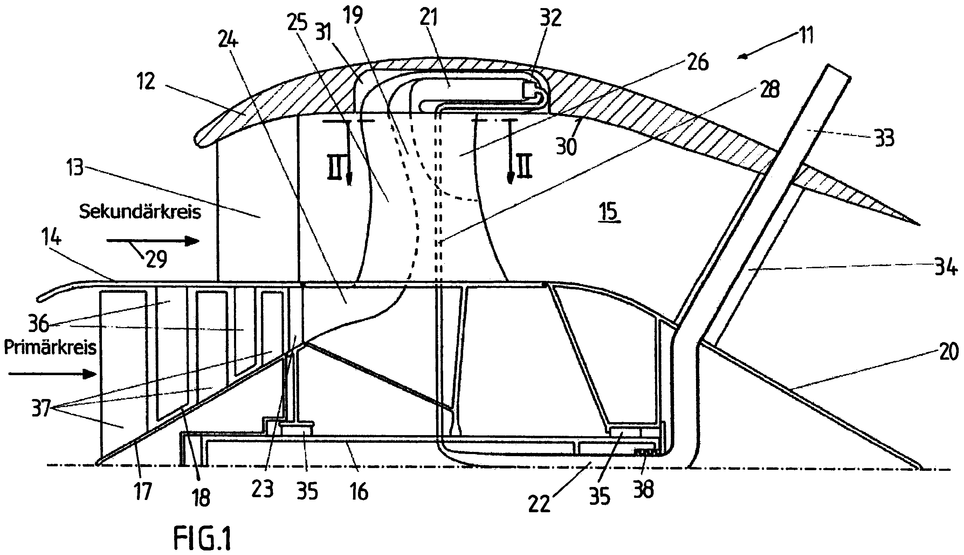

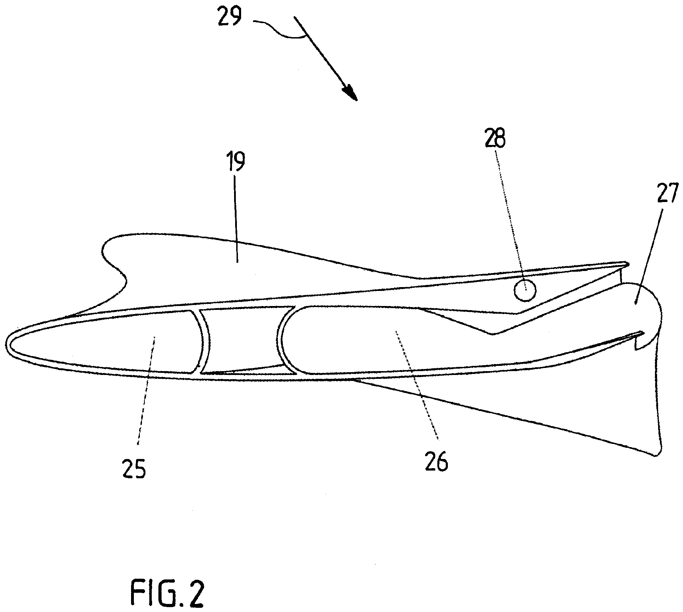

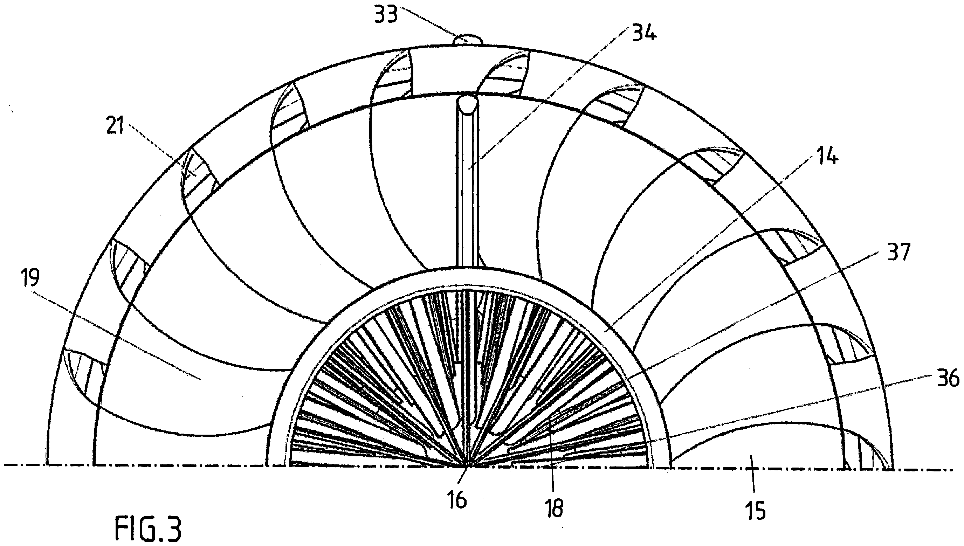

Das in den Figuren 1 bis 3 schematisch dargestellte Strahltriebwerk weist ein feststehendes Gehäuse 11 auf, das eine äußere Gehäusewandung 12 umfasst, die über radiale Stützen 13 mit einem inneren Gehäuseabschnitt 14 verbunden ist. Zwischen dem inneren Gehäuseabschnitt 14 und der äußeren Gehäusewandung 12 ist ein ringförmiger Kanal 15 vorhanden, in der die Sekundärströmung ausgebildet wird.

Im inneren Gehäuseabschnitt 14 ist eine Hauptwelle 16 drehbar gelagert. Diese Hauptwelle 16 trägt an ihrem vorderen Ende 17 einen Axialverdichter 18, der mehrere Stufen mit feststehenden Leitschaufeln 36 und mit der Hauptwelle rotierenden Schaufeln 37 aufweist.

Weiterhin sind auf der Hauptwelle 16 die Fanschaufeln 19 des Fans angeordnet. Die Fanschaufeln 19 drehen sich somit in gleiche Richtung und mit der gleichen Drehgeschwindigkeit wie die Verdichterstufen. Grundsätzlich können auch ein Getriebe oder koaxiale Wellen vorhanden sein, um unterschiedliche Drehrichtungen oder Drehgeschwindigkeiten des Fans und des Verdichters zu ermöglichen.

In Strömungsrichtung weiter hinten und in der Figur 1 auf der rechten Seite befindet sich der Austrittskonus 20 des Gehäuses. Der Austrittskonus 20 kann einen sich in Strömungsrichtung zumindest teilweise verjüngenden Querschnitt aufweisen. Die Hauptwelle 16 ist über Lager 35 in dem inneren Gehäuseabschnitt drehbar gelagert.

In den Fanschaufeln 19 ist jeweils eine Brennkammer 21 vorhanden, die über eine zentrale Treibstoffzuführung 22 mit Treibstoff versorgt wird. Der Treibstoff wird über eine Labyrinthdichtung 38 von einem feststehenden Gehäuseteil in die Hauptwelle geleitet. Die feststehende Treibstoffleitung 33 wird über eine in Strömungsrichtung 29 hintere Stütze 34 von dem inneren Gehäuseabschnitt 14 zu der äußeren Gehäusewandung aus dem Strahltriebwerk geführt, wo sie mit der Treibstoffpumpe und dem Treibstofftank verbunden werden kann.

Von der Hauptwelle 16 im inneren Gehäuseabschnitt verläuft jeweils eine Treibstoffleitung 28 durch die Fanschaufel 19 bis zur Brennkammer 21. Der Ausgang 23 des Verdichters 18 gelangt über Kanäle 24 vom Inneren des inneren Gehäuseabschnitts 14 in Luftkanäle 25 in den Fanschaufeln und somit zu den Brennkammern 21. In den Brennkammern 21 wird der Treibstoff verbrannt, und die Abgase gelangen über einen Auslasskanal 26 in den Fanschaufeln durch eine teilweise axial und teilweise tangential ausgerichtete Auslassöffnung 27 in der Fanschaufel in die Sekundärströmung. Der Ausgang des Auslasskanals 26 aus der Fanschaufel 19 kann sich über die gesamte freie Höhe der Fanschaufel 19 erstrecken.

Die Brennkammern 21 sind an den äußeren Endabschnitten der Fanschaufeln angeordnet. Die einströmende und verdichtete Luft aus dem Verdichter 18 wird bis zur Brennkammer 21 durch die Drehbewegung des Fans weiterverdichtet. Weiterhin ist die Brennkammer 21 bei dem dargestellten Ausführungsbeispiel axial und entgegen der Strömungsrichtung 29 ausgerichtet. Dadurch bleibt der Durchmesser des Fans relativ klein.

Die äußere Gehäusewandung 12 weist auf ihrer Innenseite 30 eine umlaufende Ringnut 31 auf, in der die äußeren Enden der Fanschaufeln 19 verlaufen. Von vorne gesehen sind die äußeren Ende daher von der äußeren Gehäusewandung verdeckt, so dass sich nur die mittleren Abschnitte der Fanschaufeln 19 in der Sekundärströmung befinden.

Weiterhin ist bei dem gezeigten Ausführungsbeispiel vorgesehen, dass die äußeren Enden der Fanschaufeln über einen Fanring 32 miteinander verbunden sind. Dadurch wird der Fan stabilisiert, und es ist ausreichend Raum für die Brennkammern 21 vorhanden. Dieser Fanring 32 verläuft in der Ringnut 31 in der Innenseite 30 der äußeren Gehäusewandung 12. Die Auslassöffnung 27 für die Abgase befindet sich dabei in einem radialen Bereich der Fanschaufelblätter, der in dem Ringkanal 15 für die Sekundarströmung liegt.

Das austretende Abgas der Brennkammern 21 wird mit der Sekundarströmung vermischt und unter Erzeugung des Schubs am Ausgangskonus 20 des Gehäuses 11 ausgestoßen. Das Strahltriebwerk braucht keine Turbine zum Antreiben des Fans und des Verdichters aufzuweisen. Vielmehr erfolgt deren Antrieb durch den in tangentialer Richtung aus den Fanschaufeln austretenden Abgasteilstrom. Der aus der Fanschaufel austretende Abgasstrom bewirkt zusammen mit der Luft aus dem Sekundärkreis die Schubkraft.

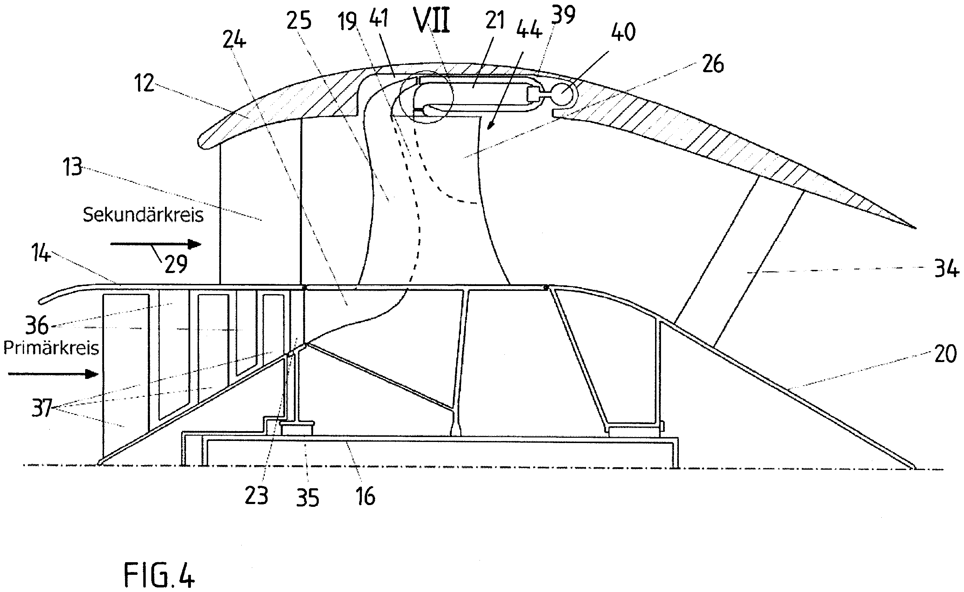

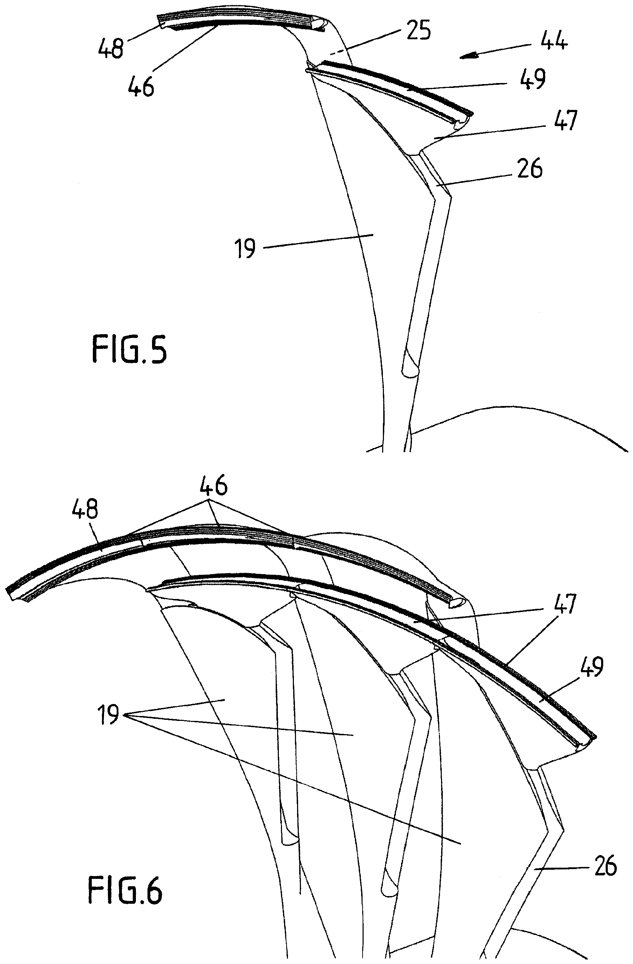

Das in den Figuren 4 bis 7 gezeigte Strahltriebwerk ist grundsätzlich gleich zu dem Strahltriebwerk in den Figuren 1 bis 3 aufgebaut, und es werden im Folgenden gleiche oder gleichwirkende Teile mit gleichen Bezugsziffern bezeichnet. Bei dem in der Figur 4 gezeigten Ausführungsbeispiel befinden sich die Brennkammern 21 nicht in den Fanschaufeln 19 sondern in dem diese umgebenden Gehäuseabschnitt 39. Die Brennkammern 21 werden durch eine dort umlaufende Treibstoffleitung 40 mit Treibstoff versorgt.

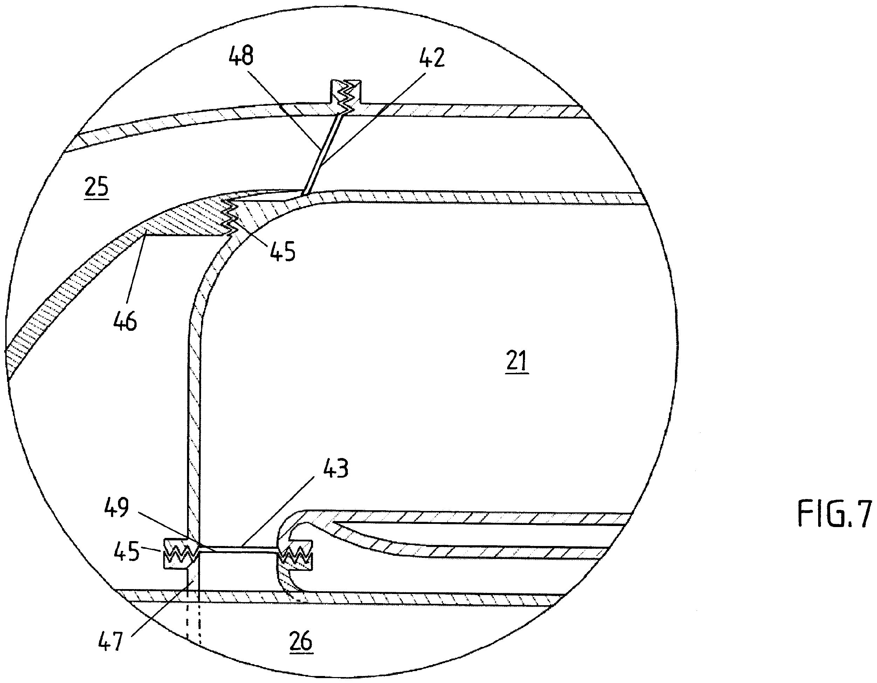

Die Brennkammern 21 drehen sich daher nicht mehr mit sondern befinden sich in dem feststehenden Gehäuseabschnitt 39, der hierfür entsprechende nach innen weisende Aufnahmen 41 aufweist, damit die Brennkammern 21 beziehungsweise deren Einlassöffnungen 42 für die Luftzufuhr und deren Auslassöffnungen 43 für das Abgas in unmittelbarer Nähe zu den freien Enden 44 der Fanschaufeln 19 liegen, um die Luft aus den Luftkanälen 25 der Fanschaufeln in die Brennkammer 21 und das Abgas der Brennkammern 21 in den Auslasskanal 26 der Fanschaufel zu leiten. Die Übergänge der Kanäle 25, 26 von der Fanschaufel zu den Brennkammern 21 ist in Figur 7 dargestellt. Es sind Labyrinthdichtungen 45 vorgesehen, die einen dichten Übergang bewirken.

Es können mehrere Aufnahmen 41 in dem Gehäuse vorhanden sein, in denen jeweils eine Brennkammer 21 angeordnet ist. Es kann aber auch vorgesehen werden, dass die Aufnahme ringförmig ausgebildet ist und eine ringförmige umlaufende Brennkammer 21 aufnimmt.

Die Einlassöffnungen 42 und die Auslassöffnungen 43 der Brennkammern 21 liegen in einem umlaufenden Kanal, der in Richtung auf die freien Enden der Fanschaufeln offen ausgebildet ist. Die Fanschaufeln 19 weisen an ihren freien Enden 44 sich in Umfangsrichtung erweiternde Abschnitte 46 und 47 auf, die jeweils kreisbogenabschnittsförmig ausgebildet sind. In der zusammengesetzten und montierten Lage bilden diese Abschnitte 46, 47 jeweils einen geschlossen Ring. Der eine Ring trägt die Austrittsöffnung 48 des Lufteinlasskanals 25 der Fanschaufel 19, während der andere Ring die Eintrittsöffnung 49 für das Abgas in die Fanschaufel 19 aufweist.

Die so gebildeten ringförmigen Öffnungen der Fanschaufeln 19 stehen in Strömungsverbindung mit den feststehenden ringförmigen Öffnungen 42, 43 der Brennkammern 21 in dem feststehenden Gehäuseabschnitt 39. Damit werden ein dichter und geschlossener Strömungsweg für die Luft einerseits und das Abgas andererseits gebildet.

## Patentansprüche

1. Strahltriebwerk mit einem feststehenden Gehäuse (11), in dem eine Primärströmung ausgebildet ist, in der einströmende Luft in wenigstens einer Brennkammer (21) verbrannt wird, und in welchem Gehäuse (11) eine Sekundärströmung ausgebildet ist, in dem einströmende Luft durch einen Fan beschleunigt und an einem Auslasskonus (20) des Gehäuses (11) zusammen mit dem Abgas der Brennkammer (21) unter Erzeugung des Schubs ausgestoßen wird, welcher Fan auf einer Hauptwelle (16) um eine Achse drehbar gelagert ist und eine Vielzahl von im wesentlichen radial verlaufenden Fanschaufeln (19) aufweist, wobei wenigstens eine Fanschaufel oder eine Mehrzahl der Fanschaufeln oder alle Fanschaufeln (19) wenigstens einen Lufteinlasskanal (25) für die Primärströmung aufweisen, der die Luft der Primärströmung durch die Fanschaufel (19) zu der Brennkammer leitet, und wobei wenigstens eine Fanschaufel oder eine Mehrzahl der Fanschaufeln oder alle Fanschaufeln (19) jeweils einen Auslasskanal (26) mit einer zumindest teilweise axial und zumindest teilweise tangential ausgerichteten Auslassöffnung (27) aufweisen, um das Abgas der Brennkammern (21) der beschleunigten Luft der Sekundärströmung zuzuführen, wobei die Auslassöffnung (27) für die Abgase sich in einem radialen Bereich der Fanschaufelblätter befindet, der in einem Ringkanal (15) für die Sekundärströmung liegt, wobei die Brennkammer (21) in einem den Fan umgebenden Teil des Gehäuses angeordnet ist, die freien Enden (44) der Fanschaufeln (19) in einen Ring münden, der zwei umlaufende Öffnungen (48, 49) aufweist, und eine Öffnung (48) mit dem Lufteinlasskanal (25) in der Fanschaufel (19) und mit der Lufteinlassöffnung (42) der Brennkammer (21) in Strömungsverbindung steht, und die andere Öffnung (49) mit dem Auslasskanal (17) in der Fanschaufel (19) und dem Abgasausgang (43) der Brennkammer in Strömungsverbindung steht, und die freien Enden (44) die Fanschaufeln (19) jeweils einen in Umfangsrichtung erweiterten ersten Bereich (46) mit der Öffnung für den Lufteinlassstrom und jeweils einen in Umfangsrichtung erweiterten zweiten Bereich (47) mit der Öffnung für den Abgasstrom aufweisen, welche ersten und zweiten Bereiche (46, 47) in der Frontansicht eine kreisbogenabschnittförmige Kontur haben derart, dass die jeweiligen Öffnungen der ersten und zweiten Bereiche in der montierten Lage jeweils die umlaufenden Öffnungen (48, 49) bilden.

2. Strahltriebwerk nach Anspruch 1, **dadurch gekennzeichnet, dass** die Brennkammer (21) in dem den Fan umgebenden Teil des Gehäuses axial ausgerichtet ist.

3. Strahltriebwerk nach Anspruch 2, **dadurch gekennzeichnet, dass** die Brennkammer (21) entgegen der Schubrichtung ausgerichtet ist.

4. Strahltriebwerk nach einem der Ansprüche 1 bis 3, **dadurch gekennzeichnet, dass** die einströmende Luft im Primärkreis durch einen Verdichter (18) vor der Brennkammer (21) verdichtet wird.

5. Strahltriebwerk nach Anspruch 4, **dadurch gekennzeichnet, dass** die Hauptwelle (16) den Verdichter (18) in der Primärströmung antreibt.

## Claims

1. A jet engine having a fixed case (11) wherein a first primary flow has been developed, wherein inlet air is burnt in at least one combustion chamber (21) and wherein a secondary flow is developed in such case (11), wherein inlet air is accelerated by a fan and is ejected through an extraction cone (20) of the case (11) together with the exhaust gas of the combustion chamber (21) while generating such thrust, said fan being pivoted on a main shaft (16) around an axle and having a great number of fan blades (19) extending substantially radially, at least one fan blade or a majority of said fan blades or all fan blades (19) having at least one air inlet channel (25) for such primary circuit leading such air of the primary circuit through the fan blade (19) to the combustion chamber and at least one fan blade or a majority of fan blades or all fan blades (19) each having one exhaust channel (26) with an exhaust opening (27) orientated at least in part axially and at least in part tangentially in order to lead the exhaust gas of the combustion chambers (21) to the accelerated air of the secondary flow, said exhaust opening (27) for the exhaust gases being positioned in a radial region of the fan blade pans which is arranged in a belt canal (15) for the secondary flow, the combustion chamber (21) being positioned in a part of the case which surrounds the fan, the free ends (44) of the fan blades (19) opening out into a ring having two circumferential openings (48, 49) and one opening (48) having an air inlet channel (25) in the fan blade (19) and being in flow communication with the air inlet opening (42) of the combustion chamber (21) and the other opening (49) being in flow communication with the exhaust channel (17) in the fan blade (19) und the exhaust gas outlet (43) of the combustion chamber and the free ends (44) of the fan blades (19) each having a first region (46) which is extended in its circumferential direction with its opening for said inlet air flow and each a second region (47) which is extended in it circumferential direction with the opening for such exhaust gas flow, wherein such first and second regions (46, 47), seen from the front, having a contour in the shape of a segment of an arc of a circle such that each opening of the first and the second regions, when being in a mounted position, each form said circumferential openings (48, 49).

2. The jet engine according to claim 1, **characterised in that** said combustion chamber (21) is axially orientated in the part of the case surrounding the fan.

3. The jet engine according to claim 2, **characterised in that** the combustion chamber (21) is orientated in the direction opposite to the thrust direction.

4. The jet engine according to one of the claims 1 to 3, **characterised in that** such inlet air in the primary circuit is compressed by means of a compressor (18) upstream such combustion chamber (21).

5. The jet engine according to claim 4, **characterised in that** the main shaft (16) drives such compressor (18) in the primary flow.

## Revendications

1. Moteur à réaction présentant un carter (11) fixe, dans lequel est formé un premier courant primaire, dans lequel l'air entrant est brûlé dans au moins une chambre de combustion (21) et dans lequel carter (11) est formé un courant secondaire dans lequel l'air entrant est accéléré à l'aide d'un ventilateur et est expulsé à travers un cône de sortie (20) du carter (11) avec le gaz d'échappement de la chambre de combustion (21) en générant une poussée, ledit ventilateur étant pivotant sur une arbre principal (16) autour d'un axe et présentant une pluralité d'aubes de ventilateur (19) s'étendant essentiellement de manière radiale, au moins une aube de ventilateur ou une pluralité d'aubes de ventilateur ou toutes les aubes de ventilateur (19) présentant au moins un canal d'admission d'air (25) pour le courant primaire conduisant l'air du courant primaire vers la chambre de combustion en passant par l'aube de ventilateur (19) et au moins une aube de ventilateur ou une pluralité d'aubes de ventilateur ou toutes les aubes de ventilateur (19) présentant chacune un canal de sortie (26) équipé d'une ouverture de sortie (27) orientée au moins en partie axialement et au moins en partie tangentiellement afin d'amener le gaz d'échappement des chambres de combustion (21) à l'air accéléré du courant secondaire, l'ouverture de sortie (27) pour les gaz d'échappement étant disposée dans une zone radiale des aubages de ventilateur qui est positionnée dans un canal annulaire (15) destiné au courant secondaire, la chambre de combustion (21) étant disposée dans une partie du carter entourant le ventilateur, les extrémités libres (44) des aubes de ventilateur (19) débouchant dans un anneau qui présente deux ouvertures (48, 49) circonférentielles, et une ouverture (48) ayant un canal d'admission d'air (25) dans l'aube de ventilateur (19) et en communication de courant avec une ouverture d'admission d'air (42) de la chambre de combustion (21) et l'autre ouverture (49) étant en communication de courant avec le canal de sortie (17) dans l'aube de ventilateur (19) et la sortie de gaz d'échappement (43) de la chambre de combustion et les extrémités libres (44) des aubes de ventilation (19) présentant chacune une première zone élargie (46) dans le sens circonférentiel avec l'ouverture destinée au courant d'admission d'air et chacune une deuxième zone élargie (47) dans le sens circonférentiel avec l'ouverture destinée au courant de gaz d'échappement, la première et la deuxième zone (46, 47) ayant, vues de face, un contour sous forme d'un segment d'arc en cercle de sorte que les différentes ouvertures de la première et de la deuxième zone forment les ouvertures circonférentielles (48, 49) quand elles sont en position montée.

2. Moteur à réaction selon la revendication 1, **caractérisé en ce que** la chambre de combustion (21) est orientée axialement dans la partie du carter entourant le ventilateur.

3. Moteur à réaction selon la revendication 2, **caractérisé en ce que** la chambre de combustion (21) est orientée dans le sens contraire de poussée.

4. Moteur à réaction selon l'une des revendications 1 à 3, **caractérisé en ce que** l'air entrant dans le circuit primaire est comprimé moyennant un compresseur (18) en amont de la chambre de combustion (21).

5. Moteur à réaction selon la revendication 4, **caractérisé en ce que** l'arbre principal (16) entraîne le compresseur (18) dans le courant primaire.
